# EUROPEAN PATENT APPLICATION

(11) **EP 3 109 694 A1**
(43) Date of publication of application: **28.12.2016**
(21) Application number: 15752504.9
(22) Date of filing: 19.02.2015
(51) Int. Cl.: G02C 13/00, G02C 7/06

(54) **SPECTACLE LENS SUPPLY SYSTEM, SPECTACLE LENS SUPPLY METHOD, SPECTACLE LENS SUPPLY PROGRAM, SPECTACLE LENS RECOMMENDED TYPE PRESENTATION DEVICE, AND SPECTACLE LENS PRODUCTION METHOD**

(30) Priority: 19.02.2014 JP 2014029452
(71) Applicant: Hoya Lens Thailand Ltd., Patumthani (TH)
(72) Inventor: HATANAKA Takashi, Shinjuku-ku, Tokyo 161-8525 (JP)
(74) Representative: Betten & Resch
(86) International application number: PCT/JP2015/054546
(87) International publication number: WO 2015/125848

(57) **Abstract**

Provided is a spectacle lens supply system (1) to supply a progressive power lens including a determination section to determine a size of an area of clear vision in the progressive power lens according to a level of a prescribed fixation disparity amount. The determination section selects a type having an area of clear vision same as or narrower than that of a reference progressive power lens when the prescribed fixation disparity amount is larger than or equal to a reference fixation disparity amount and selects a type having an area of clear vision same as or wider than that of the reference progressive power lens when the prescribed fixation disparity amount is smaller than the reference fixation disparity amount.

## Description

### Technical Field

The present invention relates to a spectacle lens supply system, a spectacle lens supply method, a spectacle lens supply program, a spectacle lens recommended type presentation device, and a spectacle lens production method for a spectacle wearer wearing or planning to wear a progressive power lens.

### Background Art

Progressive power lenses are known as one of spectacle lenses which can make a wearer to see far and near objects, (including intermediate-near vision spectacle lenses). Most of progressive power lenses include a distance portion used for looking at a distance, a near portion used for looking at a near part, and an intermediate portion (progressive portion) positioned between the distance portion and the near portion. A side portion of the spectacle lens excluding the above is an astigmatism region. A power of the progressive power lens successively varies from a power of the distance portion (distance power) to a power of the near portion (near power) and a power of this varying portion is a power of the intermediate portion (intermediate power). Hereinafter, a spectacle lens or a progressive power lens described herein is also simply referred to as a "spectacle lens" for convenience of description.

Generally, the width in the horizontal direction of an area of clear vision (definition thereof will be described later) in an astigmatism distribution of the progressive power lens is the widest in the distance portion and the narrowest in the intermediate portion. Furthermore, the width of the area of clear vision becomes drastically narrower from the distance portion to the intermediate portion while becomes a little wider from the intermediate portion to the near portion. Therefore, many of spectacle wearers of the progressive power lens feel that a sight is narrow when looking at a near object such as a document in the hands.

Generally, when a spectacle wearer of the progressive power lens feels that a near sight is narrow with a spectacle lens currently in use and visits an optician's store to eliminate this dissatisfaction and to purchase a new progressive power lens, that spectacle wearer simply chooses a spectacle lens having a wide near sight. Then the optician's store reads information such as a name of manufacturer, a model number, and an addition power provided by a hidden mark on a surface of the progressive power lens currently in use and presents a progressive power lens having a wider area of clear vision of a near portion than that of the spectacle lens.

Meanwhile, spectacle wearers of a progressive power lens include those having fixation disparity. A ratio of people having fixation disparity is said to amount to 40% of all regardless of whether a person wears a spectacle lens. Fixation disparity refers to a state where, when both eyes simultaneously look at (fixate) an object, visual axes of the both eyes do not correspond with each other on the object and the sight includes a slight shift of about several minutes in sight line angle.

Generally, a spectacle wearer with fixation disparity is rarely aware of own fixation disparity. There are mainly two reasons for this. A first reason is that fixation disparity is usually a slight shift and thus binocular vision with fusion of images in the brain does not result in a vision including a shift of the images captured by each of the left and right eyes and thus the spectacle wearer can hardly be aware of a blur of the images. A second reason is that fixation disparity is rarely confirmed except for some specialists when a spectacle lens is ordered at an optician's store and thus there is little chance for a person to know whether the person has fixation disparity.

A person having fixation disparity, however, often feels physical pain such as fatigue of the eyes, headache, or shoulder stiffness. Checking a cause of the above with a specialist or by testing at a hospital with a specialist may clarify that the person has fixation disparity. In this case, in order to relieve the pain caused by fixation disparity, it is desirable to measure a prism amount for eliminating fixation disparity using a plurality of test spectacle lenses having different prism powers and to wear a spectacle lens prescribed a prism (prism correction) in accordance with this prism amount. This prism for eliminating fixation disparity is called an aligning prism.

It is confirmed that there are individual variations in an amount of aligning prism required for eliminating fixation disparity even if a fixation disparity amount is the same (see Figs. 8 and 9 in Non Patent Literature 1). This means that a person may need a large prism amount to eliminate a small fixation disparity amount while another person may need only a small prism amount to eliminate a large fixation disparity amount. That is, a level of fixation disparity amount cannot be predicted from a level of measured aligning prism amount.

### Citation List

### Non Patent Literature

Non Patent Literature 1: Richard London et al. "Fixation disparity analysis: Sensory and motor approaches" Optometry, Vol. 77, No. 12, December 2006, pp. 590-608.

### Summary of Invention

### Technical Problem

First, general circumstances of fixation disparity will be described. Generally, when a spectacle wearer wearing or planning to wear a progressive power lens visits an optician's store or the like to purchase a progressive power lens, the optician's store rarely measures a fixation disparity amount of the spectacle wearer except for some specialists as described above but hears requests from the spectacle wearer and presents spectacle lenses of various design types. Furthermore, even when the spectacle wearer of a progressive power lens has fixation disparity, an order receiving side (spectacle lens manufacturer, etc.) that receives an order for a spectacle lens from the optician's store or the like is informed of a prism prescription value (prism amount) for eliminating fixation disparity merely as a prism amount and information to distinguish whether the prescribed prism is for eliminating fixation disparity or for correcting heterophoria is not informed.

As described in Non Patent Literature 1, there is no simple proportional relation between a fixation disparity amount and a measured aligning prism amount. Although this is known, generally, merely a prism amount for eliminating fixation disparity is measured after all. It is rather better when a prism amount focused on fixation disparity is measured; however in most cases, measurement of fixation disparity itself is not even performed. As a result of this, when an order for a spectacle lens with prism prescription is placed with a spectacle lens manufacturer, whether the prism prescription is for eliminating fixation disparity or for correcting heterophoria cannot be distinguished.

In such circumstances, the present inventor has found for the first time an issue that, the phenomenon that there is no simple proportional relation between a fixation disparity amount and a measured aligning prism amount may result in various issues with a future spectacle wearer after ultimately providing a spectacle lens to the spectacle wearer. Hereinafter, this issue will be described.

Though depending on a level of fixation disparity amount, providing a spectacle lens including an aligning prism amount for correction of fixation disparity to a spectacle wearer often results in drastic enlargement of an area of clear vision since fixation disparity is eliminated. Incidentally, when a spectacle wearer is already wearing spectacles prescribed an aligning prism for correction of fixation disparity, wearing spectacles newly produced which similarly includes an aligning prism for correction of fixation disparity has no effect of enlargement of an area of clear vision since there is no difference in correction effects of fixation disparity between the spectacles already in use and the newly produced spectacles. For a spectacle wearer, an effect of fixation disparity prescription of the newly produced spectacles should be grasped by a relative difference between fixation disparity measured while spectacles having been in use are worn and fixation disparity (to be corrected and eliminated) measured while the newly produced spectacles are worn. Meanwhile, it is extremely difficult for the spectacle wearer and a person who measures fixation disparity (e.g. store clerk at an optician's store) to grasp a level of effect of eliminating fixation disparity in advance. There are many cases that there is no idea of eliminating fixation disparity from the first place. In such circumstances, the spectacle wearer tends to prefer a spectacle lens optically designed to have a wide area of clear vision without considering the effect of eliminating fixation disparity. In a progressive lens, a design with a wide area of clear vision results in severe distortion of images in a periphery of the lens in compensation therefor and thus has a characteristic of severe blur of images seen from the periphery of the lens. Of course, when the spectacle wearer prefers such a progressive lens with a wide area of clear vision as described above and the store clerk determines that the spectacle wearer can wear the progressive lens designed to have the wide area of clear vision, an order for the progressive lens designed to have the wide area of clear vision is placed with the spectacle lens manufacturer.

The progressive lens produced in this manner originally has a wide area of clear vision according to the design and, due to elimination of fixation disparity, the spectacle wearer enjoys even a significantly wider area of clear vision. However, provided is the progressive lens with severe distortion and a severe blur of images in the periphery of the lens. There is a limit to a size of an area of clear vision that human can recognize and thus the spectacle wearer can merely feel the wide area of clear vision and the significantly wide area of clear vision as equivalent. This means that unnecessarily severe distortion or a severe blur of images in the periphery of the lens is imposed on the spectacle wearer in order to provide an unnecessarily wide area of clear vision.

Originally, in a progressive power lens, designing an optical surface of the spectacle lens to have a wider area of clear vision usually increases distortion or a blur of images in a side portion of the spectacle lens. Therefore, enlargement of an area of clear vision and mitigating distortion or a blur of images in the side portion of the spectacle lens are usually in a trade-off relationship in designing a progressive power lens (details are described in JP 2011-107239 A, etc.). Therefore, recommending a progressive power lens of a type of wide area of clear vision in the near portion according to the spectacle wearer's preference without careful consideration results in insufficient advantage of enlargement of the area of clear vision despite enlargement of the area of clear vision in the near vision since only a moderate size of an area of clear vision can be recognized due to the limit to a size of an area of clear vision that human can recognize. Meanwhile, only disadvantages of enlargement of an area of clear vision that distortion or a blur of images becomes severe becomes larger, which may result in worse vision.

The present inventor has found the above issue and carried out further examination. As a result of this, a finding has been obtained that it is desirable not only to simply recognize the contents described in Non Patent Literature 1, which is a phenomenon that there are individual variations in an aligning prism amount required for eliminating fixation disparity even when a fixation disparity amount is the same, but also to utilize the phenomenon in optical design of spectacle lenses.

A main object of the present invention is to provide a technique capable of supplying a type of progressive power lens more suitable for a spectacle wearer than before from among various progressive power lenses having different size types of area of clear vision according to spectacle lens design.

### Solution to Problem

The present inventor has conducted examination in order to solve the above issue. The present inventor has examined how to integrate such individual variations as described in Non Patent Literature 1 into optical design of spectacle lenses. As a result of this examination, the present inventor has obtained a finding that the phenomenon that there are individual variations in an aligning prism amount required for eliminating fixation disparity can be utilized in optical design of spectacle lenses by obtaining a fixation disparity amount of each subject in advance and varying a size of an area of clear vision of a reference spectacle lens according to the fixation disparity amount of each subject.

Specific aspects of the invention devised based on the above finding are as follows.

A first aspect of the present invention is a spectacle lens supply system to supply a progressive power lens, the system including a determination section to determine a size of an area of clear vision in a progressive power lens according to a level of a prescribed fixation disparity amount.

A second aspect of the present invention is the spectacle lens supply system according to the first aspect, where the determination section selects a type having an area of clear vision same as or narrower than that of a reference progressive power lens when the prescribed fixation disparity amount is larger than or equal to a reference fixation disparity amount and selects a type having an area of clear vision same as or wider than that of the reference progressive power lens when the prescribed fixation disparity amount is smaller than the reference fixation disparity amount.

A third aspect of the present invention is the spectacle lens supply system according to the first aspect, the system including an input section to input, to the determination section, the prescribed fixation disparity amount or a prescribed prism amount and an output section to output the size of the area of clear vision of the progressive power lens determined by the determination section and the prescribed prism amount.

A fourth aspect of the present invention is the spectacle lens supply system according to third aspect, where the determination section calculates a fixation disparity amount according to the prescribed prism amount input by the input section, estimates, from a value of the calculated fixation disparity amount, a level of improvement of vision when the fixation disparity is corrected, and determines the size of the area of clear vision of the progressive power lens based on an estimation result thereof.

A fifth aspect of the present invention is the spectacle lens supply system according to any one of the first to fourth aspects, where the determination section determines at least a size of an area of clear vision of a near portion as the size of the area of clear vision of the progressive power lens.

A sixth aspect of the present invention is a spectacle lens supply method to supply a progressive power lens, including a determination step of determining a size of an area of clear vision in a progressive power lens according to a level of a prescribed fixation disparity amount.

A seventh aspect of the present invention is a non-transitory computer-readable recording medium storing a spectacle lens supply program to cause a computer, in a spectacle lens supply system to supply a progressive power lens, to function as a determination section to determine a size of an area of clear vision in the progressive power lens according to a level of a prescribed fixation disparity amount.

An eighth aspect of the present invention is a spectacle lens recommended type presentation device to present a recommended type recommended with respect to a size of an area of clear vision of a progressive power lens, the device including a determination section to determine a size of an area of clear vision in the progressive power lens according to a level of a prescribed fixation disparity amount.

A ninth aspect of the present invention is a spectacle lens production method including a determination step of determining a size of an area of clear vision in a progressive power lens according to a level of a prescribed fixation disparity amount.

### Advantageous Effects of Invention

The present invention allows for providing a technique capable of supplying a type of progressive power lens more suitable for a spectacle wearer than before from among various progressive power lenses having different size types of area of clear vision according to spectacle lens design.

### Brief Description of Drawings

Fig. 1 is a schematic diagram illustrating an exemplary configuration of a spectacle lens supply system according to an embodiment of the present invention.
Fig. 2 is a schematic diagram illustrating an exemplary configuration of an order placing device according to the embodiment of the present invention.
Figs. 3A to 3C are diagrams schematically illustrating differences among size types of area of clear vision of progressive power lenses by astigmatism distributions.
Fig. 4 is a flowchart illustrating an exemplary spectacle lens recommended type presentation method according to the embodiment of the present invention.
Fig. 5 is a diagram illustrating an exemplary data table referred to by a selector, when a spectacle wearer prefers a spectacle lens having a wide area of clear vision, in order to select a size type of area of clear vision of a progressive power lens.
Fig. 6 is a diagram illustrating an exemplary data table referred to by the selector, when a spectacle wearer prefers a spectacle lens having an area of clear vision equivalent to that of a spectacle lens currently in use, in order to select a size type of area of clear vision of a progressive power lens.
Fig. 7 is a diagram illustrating correlation among a fixation disparity amount, a prism amount, and a level of improvement of vision.
Figs. 8A to 8E are diagrams for explaining an exemplary measurement method of a fixation disparity amount.

### Description of Embodiments

Hereinafter, an embodiment of the present invention will be described in detail with reference to the drawings.

The embodiment of the present invention will be described in the following order.
1. Configuration of Spectacle Lens Supply System
2. Configuration of Order Placing Device
3. Procedures of Spectacle Lens Recommended Type Presentation Method
4. Effects of Embodiment
5. Variations

### <1. Configuration of Spectacle Lens Supply System>

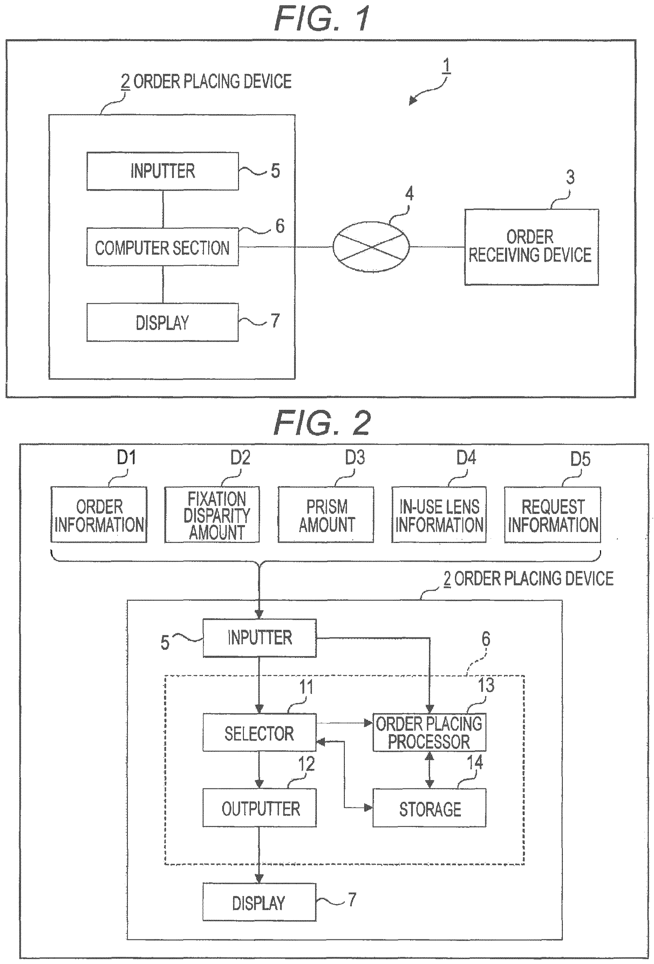

Fig. 1 a schematic diagram illustrating an exemplary configuration of a spectacle lens supply system according to an embodiment of the present invention.

A spectacle lens supply system 1 illustrated in Fig. 1 has a configuration where an order placing device 2 to place an order for a spectacle lens and an order receiving device 3 to receive the order for the spectacle lens are connected to allow communication therebetween by a communication network 4. The order placing device 2 is used, for example, while installed at an optician's store and the order receiving device 3 is used, for example, while installed at a production facility of spectacle lenses or the like. The communication network 4 includes, for example, the Internet, a dedicated line, or the like. In this spectacle lens supply system 1, information required for placing an order for a spectacle lens is transmitted to the order receiving device 3 via the communication network 4. Furthermore in the order receiving device 3, required spectacle lens processing is performed using the received information. A spectacle lens finally determined as a conforming article after testing or the like is supplied to the optician's store which has placed the order. The spectacle lens processing includes polishing processing of an optical surface of the spectacle lens, lens shape processing for fitting into a frame, or the like.

In the spectacle lens supply system 1 configured as above, correspondence relation between the order placing device 2 and the order receiving device 3 may be any one of correspondence relation of 1 : 1, correspondence relation of m : 1 (where m is a natural number of 2 or more), correspondence relation of 1 : n (where n is a natural number of 2 or more), and correspondence relation of m : n. Moreover, the order placing device 2 and the order receiving device 3 may be installed in the same country or in different countries. Although not illustrated, various servers (e.g. data server) may be connected to the communication network 4 and the servers and the order placing device 2 or the order receiving device 3 may communicate data as required.

### <2. Configuration of Order Placing Device>

The order placing device 2 is provided as an exemplary "spectacle lens recommended type presentation device" that is a part of the "spectacle lens supply system" of an embodiment of the present invention. The order placing device 2 is configured by hardware resources of a computer and includes an inputter 5, a computer section 6, and a display 7. The inputter 5 inputs various data (information) to the order placing device 2. The inputter 5 can be configured by using an input operation device such as a keyboard, a mouse, and a touch panel. The data input via the inputter 5 includes at least that illustrated in Fig. 2, namely, order information D1, a fixation disparity amount D2, a prism amount D3, in-use spectacle lens information D4, and request information D5.

The order information D1 includes information required for placing an order for a spectacle lens excluding the fixation disparity amount D2, the prism amount D3, the in-use spectacle lens information D4, and the request information D5. Describing specific examples, the order information D1 includes an addition power of the spectacle lens (distance power, near power), spectacle lens prescription information including an astigmatic axis or the like, frame information including a type, a material, a size, a frame shape, etc. of a spectacle frame, and layout information used for alignment of the spectacle lens and the spectacle frame.

Each piece of information of the fixation disparity amount D2, the prism amount D3, the in-use spectacle lens information D4, and the request information D5 is input by the inputter 5 as one piece of information on a spectacle wearer wearing or planning to wear a progressive power lens (hereinafter simply referred to as "spectacle wearer"). Herein, wearing a spectacle lens (including progressive power lenses) means wearing spectacles where spectacle lenses (including test spectacle lenses) are mounted to a spectacle frame (including a test frame). The fixation disparity amount D2 corresponds to a prescribed fixation disparity amount of the spectacle wearer and can be obtained by measurement. When the spectacle wearer is prescribed a prism for the first time, a fixation disparity amount of the spectacle wearer is used as the prescribed fixation disparity amount. Furthermore, when spectacles already in use by the spectacle wearer are prescribed an aligning prism for correction of fixation disparity or a prism for correction of heterophoria, a fixation disparity amount measured while the spectacles in use are worn or the prism already prescribed is worn is used as the prescribed fixation disparity amount. The prism amount D3 corresponds to a prescribed prism amount of the spectacle wearer and can be obtained by measurement. When the spectacle wearer is prescribed a prism for the first time, that prism amount is used as the prescribed prism amount. Furthermore, when spectacles already in use by the spectacle wearer are prescribed an aligning prism for correction of fixation disparity or a prism for correction of heterophoria, a prism amount added in order to correct fixation disparity measured while the spectacles in use are worn or the prism already prescribed is worn is used as the prescribed prism amount. Either of measurement of the fixation disparity amount D2 and measurement of the prism amount D3 is performed as one of steps of eye examination. Incidentally, when the spectacle wearer is prescribed a prism for the first time, it is preferable to include, in information of the fixation disparity amount D2, that the spectacle wearer is prescribed the prism for the first time in addition to the fixation disparity amount without using the prism. Furthermore, when spectacles already in use by the spectacle wearer are prescribed an aligning prism for correction of fixation disparity or a prism for correction of heterophoria, it is preferable to include, in the fixation disparity amount D2, a fixation disparity amount measured while the spectacles in use are worn in addition to the fixation disparity amount without using the prism.

The in-use spectacle lens information D4 is related to a spectacle lens currently in use by the spectacle wearer of a progressive power lens. When the spectacle lens in use by the spectacle wearer is a progressive power lens, the in-use spectacle lens information D4 can be acquired by reading information provided on a surface of this progressive power lens by a hidden mark or the like. The in-use spectacle lens information D4 in this case includes, for example, a name of manufacturer of the spectacle lens, a type, an addition power, a refractive power, or an eye point of the spectacle lens, etc. The request information D5 includes information of a request from the spectacle wearer upon purchase of a spectacle lens. The request information D5 includes a requested item from the spectacle wearer such as a weight of the spectacle lens, a thickness of the spectacle lens, a size of an area of clear vision, etc. Incidentally, the "area of clear vision" herein referred to is a region determined in design of a progressive power lens as a region of clear vision of objects in an astigmatism distribution of the progressive power lens. A size of the area of clear vision of a progressive power lens is not only determined by a basic progressive corridor design distribution of the progressive power lens but also largely varies depending on a level of addition power and a corridor length. Therefore, representing the size of the area of clear vision uniformly by a value results in a difficulty in interpretation. Rather, it is preferable to use as a reference a size of an area of clear vision of a standard design prepared for an addition power and a corridor length of each progressive power lens and to relatively represent the size whether the size is equivalent, wider, or narrower than the reference size.

### (Computer Section)

The computer section 6 is configured by a central processing unit (CPU), a read only memory (ROM), a random access memory (RAM), a hard disk drive (HDD), etc. that are a part of hardware resources of a computer. The display 7 is configured by, for example a liquid crystal display device or an organic EL display device.

The computer section 6 includes a selector 11, an outputter 12, an order placing processor 13, and a storage 14 as illustrated in Fig. 2. Each of the functional sections is implemented by using the aforementioned hardware resources of a computer. Each of the aforementioned functional sections of the computer section 6 is implemented by, for example, a program stored in a ROM or an HDD which is read by a CPU into a RAM and executed thereby. In this case, the program can be extracted as one aspect of the present invention.

### (Selector)

The selector 11 is provided as an exemplary determination section to determine a size of an area of clear vision of a progressive power lens according to a level of the prescribed fixation disparity amount. "To determine a size of an area of clear vision" means to determine how wide or narrow the area of clear vision should be. The selector 11 selects a size type of area of clear vision of a progressive power lens recommended to the spectacle wearer according to the fixation disparity amount input by the inputter 5. More specifically, the selector 11 estimates a level of improvement of vision from a value of the fixation disparity amount D2 when fixation disparity of the spectacle wearer is corrected according to the prism amount D3 input by the inputter 5 and selects a size type of area of clear vision of a progressive power lens recommended to the spectacle wearer based on the estimation result.

Incidentally, as for a specific method of balancing a size type of area of clear vision and an astigmatism distribution, a known method may be used (e.g. a method described in JP 2011-107239 A).

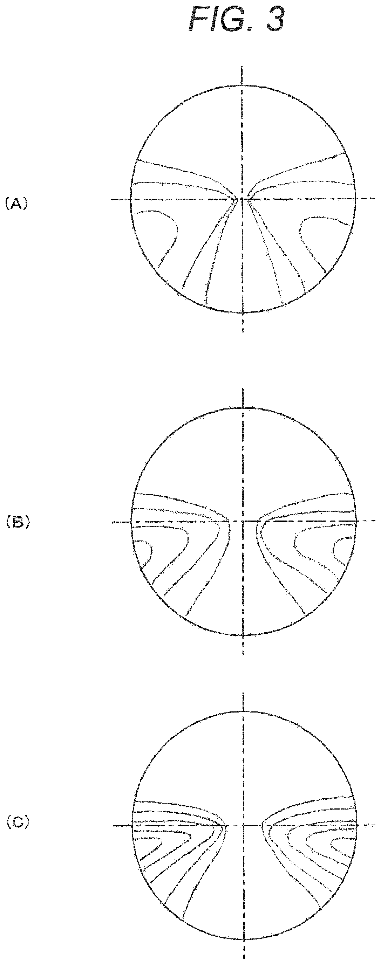

A progressive power lens includes a distance portion, an intermediate portion, and a near portion where sizes of area of clear vision are different from each other. Therefore, classifying the sizes of area of clear vision of progressive power lenses by types results in a plurality of types such as a type where an area of clear vision of a distance portion is designed to be wide, a type where an area of clear vision of an intermediate portion is designed to be wide, a type where an area of clear vision of a near portion is designed to be wide, and a type where both of a distance portion and a near portion are designed to be wide. Here, for convenience of description, the size types of area of clear vision of progressive power lenses are assumed as simply classified into three types of "narrow", "middle", and "wide". Figs. 3A to 3C schematically illustrate differences among size types of area of clear vision of progressive power lenses by astigmatism distributions with Fig. 3A representing a type of narrow area of clear vision, Fig. 3B representing a type of middle area of clear vision, and Fig. 3C representing a type of wide area of clear vision.

### (Outputter)

The outputter 12 outputs (presents), as a recommended type, the size type of area of clear vision of a progressive power lens selected by the selector 11. A specific output mode may be display output, printout, voice output or the like. As one example, it is assumed herein that display output is performed on the display 7 by a text, an illustration, a picture, an image, a video (moving image), or the like.

### (Order Placing Processor)

The order placing processor 13 performs order placing processing of a spectacle lens. Specifically, the order placing processor 13 performs processing of extracting information required for placing an order for a spectacle lens from among pieces of information having been input by the inputter 5 and transmitting this information to the order receiving device 3 via the communication network 4. The order placing processor 13 further performs processing of transmitting information (manufacturer, type, etc.) to specify a spectacle lens of the recommended type finally determined (confirmed) by a clerk of the optician's store with a consent of the spectacle wearer to the order receiving device 3 via the communication network 4.

### (Storage)

The storage 14 is used for storing various data handled in the order placing device 2. The data stored in the storage 14 includes a data table referred to when the selector 11 selects the size type of area of clear vision of a progressive power lens. This data table is prestored in the storage 14 and referred to by the selector 11 as required.

### <3. Procedures of Spectacle Lens Recommended Type Presentation Method>

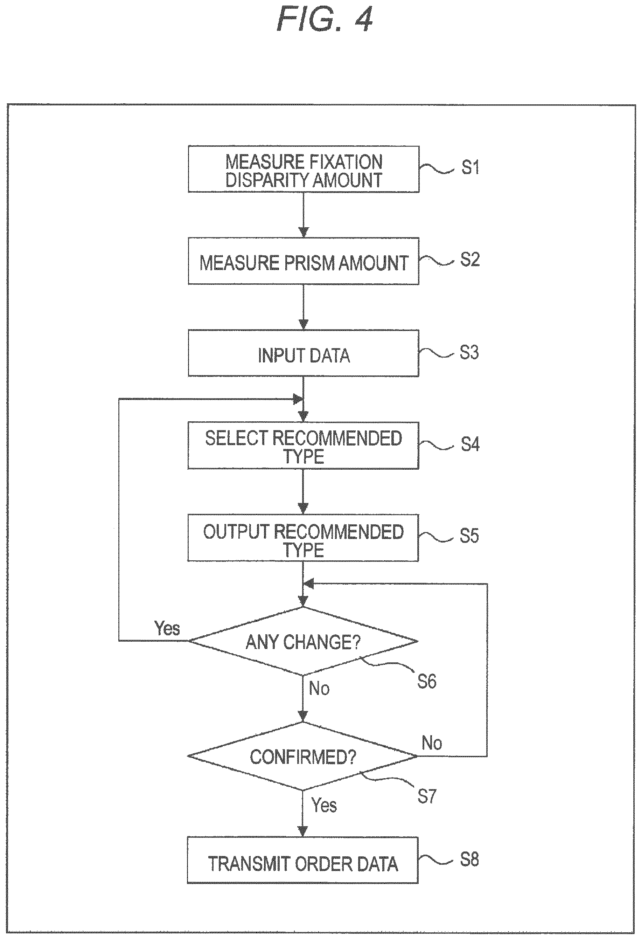

Fig. 4 is a flowchart illustrating an exemplary spectacle lens recommended type presentation method according to the embodiment of the present invention.

### (Measurement of Fixation Disparity Amount)

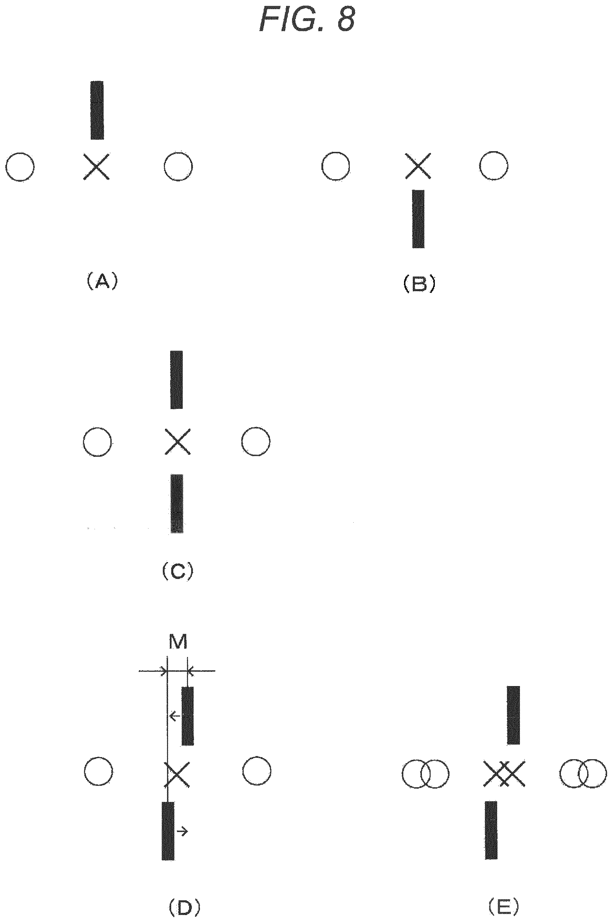

First, the fixation disparity amount of the spectacle wearer is measured (S1). As for measurement of the fixation disparity amount, various methods can be used including a known measurement method. Hereinafter, an exemplary measurement method of fixation disparity amount in the horizontal direction will be described. When the fixation disparity amount of the spectacle wearer is measured, for example, separate images are presented to the left eye and the right eye using a 3-D image display device and 3-D spectacles. Specifically, an image illustrated in Fig. 8A is presented to the left eye while an image illustrated in Fig. 8B is presented to the right eye. In each of the images, an image of "○ × ○" is presented at the same position for both of the left and right eyes. Furthermore with respect to an image of upper and lower vertical lines (nonius lines), only the upper side vertical line is presented to the left eye while only the lower side vertical line is presented to the right eye. In this case, the spectacle wearer without fixation disparity can see the upper and lower vertical lines at the same position in the horizontal direction (leftward/rightward direction) as illustrated in Fig. 8C.

Contrary to this, the spectacle wearer with fixation disparity sees positions of the upper and lower vertical lines shifted along the horizontal direction as illustrated in Fig. 8D. Here, the image of "○ × ○" fixated by the left and right eyes is formed into an image at positions each shifted from the central fovea of retina due to fixation disparity of the spectacle wearer as illustrated in Fig. 8E. Note that the image of "○ × ○" is seen by the left and right eyes in common and thus fusion of image by image processing in the brain results in perception, by the spectacle wearer, of the image of "○ × ○" as one image without a shift. Contrarily, the images of the upper and lower vertical lines are separately seen by each of the left eye and the right eye and thus fusion of image by image processing in the brain is not performed. Therefore, the spectacle wearer perceives the images of the upper and lower vertical lines as an image with positions shifted along the horizontal direction. An amount of shift in image positions M represents a size of fixation disparity amount. This fixation disparity amount is obtained in the following manner.

First, presentation positions of the images of "○ × ○" fixated by the left and right eyes of the spectacle wearer are fixed without moving. That is, a state where the images of "o × ○" are fixated by the left and right eyes is maintained. In this state, presentation positions of the upper and lower vertical lines are moved along the horizontal direction and thereby adjusted. Specifically, the presentation position of the upper vertical line and the presentation position of the lower vertical line are moved in the opposite directions by the same amount as illustrated by arrows in Fig. 8D, thereby adjusting the presentation positions of the upper and lower vertical lines. This adjustment of presentation positions is carried out until the spectacle wearer with fixation disparity no longer perceives the shift in positions of the upper and lower vertical lines, that is, until the spectacle wearer perceives that the upper and lower vertical lines are at the same positions in the horizontal direction as in Fig. 8C. Here, the amount of adjustment of the presentation positions of the upper and lower vertical lines represents a fixation disparity amount (sight line angle). Note that the amount of adjustment of the presentation positions is a value in units of length and therefore the value is substituted in a geometric formula to convert it into a value in units of angle. In the above method, the fixation disparity amount of the spectacle wearer is measured by one minute where an angle of one degree is equally divided by 60. Incidentally, other than the method of adjusting the presentation positions of the vertical lines, there is another method of measuring the fixation disparity amount by commonly presenting a graduation line to the left and right eyes in optotypes of Figs. 8A to 8E and reading, from the graduation line, an amount of shift in the vertical lines.

Moreover, fixation disparity is also measured along the vertical direction in order to measure a shift in a line of sight along the vertical direction. In this case, measurement can be made by rotating the optotypes of Figs. 8A to 8E by 90°, vertically aligning the optotype of "○ × ○" to commonly display the optotype for the left and right eyes, and displaying horizontal lines of "- image" on both sides of the "× optotype" separately for the left and right eyes.

A fixation disparity amount of the spectacle wearer obtained by such measurement is a fixation disparity amount in the horizontal direction. When a fixation disparity amount in the vertical direction is measured, a fixation disparity amount can be measured using an optotype including a pair of nonius lines (horizontal lines) on the left and right.

Furthermore, when a spectacle lens currently in use by the spectacle wearer has been previously prescribed a prism, a fixation disparity amount is measured while the spectacle lens is worn. This is because there is a difference between a level of improvement of vision when a person with fixation disparity wears a spectacle lens with prism prescription for the first time and a level of improvement of vision when a person with fixation disparity has been wearing a spectacle lens with prism prescription and wears a spectacle lens prescribed a prism this time again. That is, it is intended to accurately estimate how much improvement is made in vision of the spectacle wearer by the prism prescription based on a prism amount currently measured.

### (Measurement of Prism Amount)

Next, the prism amount of the spectacle wearer is measured (S2). As for measurement of the prism amount, a known measurement method can be used. Describing one example, a plurality of test spectacle lenses having different prism powers is used for measurement of prism amount. Specifically, for example, with spectacle wearers confirmed to have fixation disparity in the aforementioned measurement of fixation disparity amount, visions are confirmed using some test spectacle lenses of prism. Based on results thereof, the spectacle lens that allows for a vision without fixation disparity is specified from among the test spectacle lenses. Thereafter, a prism power of the specified test spectacle lens is read as an aligning prism amount for correction of fixation disparity of the spectacle wearer. Measurement of the aligning prism amount is performed for each of the vertical direction and the horizontal direction.

### (Data Input)

Next, each value of the fixation disparity amount D2 and the prism amount D3 obtained from the above measurement is input from the inputter 5 of the order placing device 2 together with other information (order information D1, in-use spectacle lens information D4, or request information D5) (S3). This allows the computer section 6 to perform the following processing using data input from the inputter 5.

### (Selection of Recommended Type)

That is, the selector 11 selects a size type of area of clear vision of a progressive power lens recommended to the spectacle wearer using the data input from the inputter 5 (S4). Upon selecting a recommended type, the selector 11 refers to a data table prestored in the storage 14. This data table is registered with data for selecting a size type of area of clear vision of a progressive power lens recommended to the spectacle wearer. Furthermore in storage 14, for example, at least two data tables are stored such that the data table to be referred to can be selected according to information related to a "size of clear sight" included in the request information D5. Specifically, the data tables are the data table to be referred to when the spectacle wearer prefers a spectacle lens with a wide clear vision and the data table to be referred to when the spectacle wearer prefers a spectacle lens having a clear sight equivalent to that of a spectacle lens currently in use by the spectacle wearer.

Incidentally, the "clear sight" here refers to a sight where an object can be clearly seen when the spectacle wearer sees the object through a spectacle lens set with a predetermined area of clear vision and to a sight where the spectacle wearer can subjectively see the object clearly.

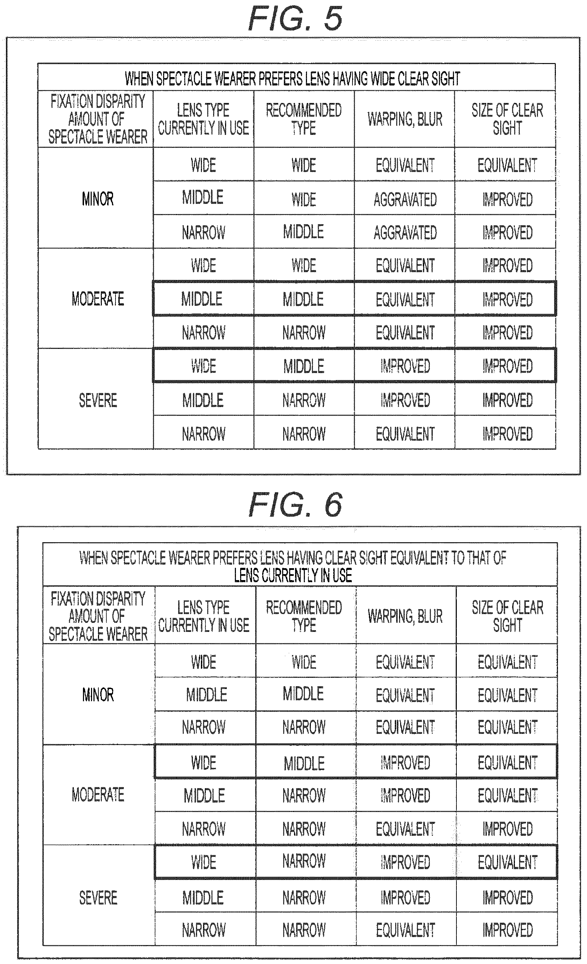

Fig. 5 is a diagram illustrating an exemplary data table referred to by a selector, when the spectacle wearer prefers a spectacle lens having a wide clear sight, in order to select a size type of area of clear vision of a progressive power lens. Fig. 6 is a diagram illustrating an exemplary data table referred to by the selector, when a spectacle wearer prefers a spectacle lens having a clear sight equivalent to that of a spectacle lens currently in use, in order to select a size type of area of clear vision of a progressive power lens.

Incidentally, since it is extremely rare for a spectacle wearer who wears a spectacle lens capable of eliminating fixation disparity for the first time to narrow a clear sight, cases of "when spectacle wearer prefers spectacle lens having wide clear sight" (Fig. 5) and "when spectacle wearer prefers spectacle lens having clear sight equivalent to that of spectacle lens currently in use" (Fig. 6) are described in this embodiment.

Measurement of fixation disparity amount is performed separately in the horizontal direction and the vertical direction. Therefore, it is preferable to use, as a value representing the fixation disparity amount of the spectacle wearer for determining the recommended type of progressive power lens in Figs. 5 and 6, a larger value after comparison between an absolute value of the fixation disparity amount of the spectacle wearer in the horizontal direction and an absolute value of the fixation disparity amount of the spectacle wearer in the vertical direction.

Furthermore, of the fixation disparity amounts that are slight shifts in a line of sight, fixation disparity in the vertical direction has a larger influence on a vision of the spectacle wearer than fixation disparity in the horizontal direction. Therefore, it is further preferable to use, as the value representing the fixation disparity amount of the spectacle wearer for determining the recommended type of progressive power lens in Figs. 5 and 6, a larger value after comparison between the absolute value of the fixation disparity amount of the spectacle wearer in the horizontal direction and twice the absolute value of the fixation disparity amount of the spectacle wearer in the vertical direction.

In the data tables illustrated in Figs. 5 and 6, a fixation disparity amount of the spectacle wearer is classified into three groups of "minor", "moderate", and "severe" in an ascending order. Specifically, a case of a fixation disparity amount less than 2 minutes is classified into "minor", a case of 2 minutes or more but less than 4 minutes as "moderate", and a case of 4 minutes or more as "severe" for example. In Figs. 5 and 6, each of the items of "size type of area of clear vision of progressive power lens currently in use (spectacle lens type currently in use)" and "size type of area of clear vision of progressive power lens recommended to spectacle wearer (recommended type)" is further classified into three groups by each group of the fixation disparity amount. Furthermore, though not required as the information to register in the data table referred to by the selector 11, each of a "level of distortion or blur of progressive power lens (distortion , blur)" and a "size of clear sight", when the progressive power lens currently in use is replaced with the recommended type, is classified into three groups and thereby displayed as reference information for describing the contents of the invention.

In the data tables illustrated in Figs. 5 and 6, recommended types of progressive power lens are registered according to estimation criteria described below. That is, it is estimated that a level of improvement of vision that a person with a severe fixation disparity amount feels when wearing a spectacle lens with prism prescription (level of enlargement of the clear sight that the person feels) is equivalent to a level of improvement of vision that the spectacle wearer feels when a size type of area of clear vision of a progressive power lens is changed from "narrow" to "wide". It is also estimated that a level of improvement of vision that a person with a moderate fixation disparity amount feels when wearing a spectacle lens with prism prescription is equivalent to a level of improvement of vision that the spectacle wearer feels when a size type of area of clear vision of a progressive power lens is changed from "middle" to "wide" or from "narrow" to "middle".

Such estimation criteria can be experimentally defined in advance. Specifically, the spectacle wearer of a progressive power lens without prism prescription but with fixation disparity is subjected to experiences of feeling each of a size of an area of clear vision when a progressive power lens with prism prescription but without changing an area of clear vision is worn and a size of an area of clear vision when a progressive power lens without prism prescription but with an enlarged area of clear vision is worn. The results of an appropriated number of spectacle wearers are then collected. How much the spectacle wearer feels that the clear sight is wider when what level of fixation disparity amount is eliminated is statistically confirmed. Based on this result, the estimation criteria are defined.

Note that other than such an experimental method, the estimation criteria may be defined based on simulation results of ray tracking for example.

Incidentally, the estimation criteria specifically include "reference fixation disparity amount" for defining minor, moderate, and severe or a "reference size of area of clear vision" for defining the area of clear vision to be narrow, middle, or wide.

As the "reference fixation disparity amount" for the spectacle wearer wearing a spectacle lens for eliminating fixation disparity for the first time for example, those experimentally defined in advance in the above manner may be employed. Meanwhile for a person who has worn a spectacle lens for eliminating fixation disparity, a fixation disparity amount upon production of the previous spectacle lens may be set as the "reference fixation disparity amount". Of course also in this case, the criteria for eliminating fixation disparity for the first time may be employed.

As the "reference size of an area of clear vision" for the spectacle wearer wearing a spectacle lens for eliminating fixation disparity for the first time for example, a size of an area of clear vision in a spectacle lens designed according to a prescribed value may be employed. Alternatively, a size of an area of clear vision in a spectacle lens worn at the time of measuring fixation disparity may be employed. It is even more preferable if preferences of the spectacle wearer with respect to the clear sight is added to this design. Meanwhile for a person who has worn a spectacle lens for eliminating fixation disparity, a size of an area of clear vision of the spectacle lens upon production of the previous spectacle lens may be set as the "reference size of area of clear vision". Of course also in this case, the criteria for eliminating fixation disparity for the first time may be employed.

Considering the example of the above estimation criteria, the selector 11 selects a type having an area of clear vision same as or narrower than that of the reference progressive power lens when the fixation disparity amount of the spectacle wearer is greater than or equal to the reference fixation disparity amount. The reference progressive power lens refers to the progressive power lens without consideration for the fixation disparity amount.

Specifically describing, when the spectacle wearer orders the spectacle lens capable of eliminating fixation disparity for the first time and the spectacle wearer requests for enlargement of the clear sight, only eliminating fixation disparity results in significant enlargement of the clear sight. Therefore, a type having a narrow area of clear vision of a spectacle lens is selected, thereby suppressing the maximum astigmatism in the side portion of the spectacle lens.

When the fixation disparity amount of the spectacle wearer is smaller than the reference fixation disparity amount, the selector 11 selects a type having an area of clear vision same as or wider than that of the reference spectacle lens.

Specifically describing, when the spectacle wearer orders the spectacle lens capable of eliminating fixation disparity for the first time and the fixation disparity amount is minor, it is difficult to ensure the clear sight as requested by the spectacle wearer only with eliminating effects of fixation disparity. Therefore, a type having a wide area of clear vision of a spectacle lens is selected with the maximum astigmatism in the side portion of the spectacle lens sacrificed.

Incidentally, when the spectacle wearer orders a spectacle lens capable of eliminating fixation disparity for the second time with a difference of fixation disparity amount between the current measurement and the previous measurement less than or equal to a reference value (that is, a level of aggravation of fixation disparity is less than or equal to a moderate level) and the spectacle wearer requests for a clear sight equivalent to or wider than that of the spectacle lens previously produced, selected is a type having an area of clear vision same as or wider than that of the reference spectacle lens (that is, the spectacle lens previously produced). On the other hand, when a difference of fixation disparity amount between the current measurement and the previous measurement is more than or equal to a reference value (that is, a level of aggravation of fixation disparity is more than or equal to the moderate level) and the spectacle wearer requests for a clear sight equivalent to or wider than that of the spectacle lens previously produced, eliminating aggravated fixation disparity can enlarge the clear sight and thus selected is a type having an area of clear vision narrower than or same as that of the spectacle lens previously produced.

The selector 11 confirms information related to the "size of clear sight" included in the request information D5, and, as a result of this, when the spectacle wearer prefers a spectacle lens with a wide clear sight and wears the spectacle lens capable of eliminating fixation disparity for the first time, the selector 11 refers to the data table illustrated in Fig. 5 and thereby selects the size type of area of clear vision (recommended type) of a progressive power lens recommended to the spectacle wearer. Hereinafter, specific descriptions are given.

### (When Fixation Disparity Amount of Spectacle Wearer Is Minor)

When a fixation disparity amount of the spectacle wearer is minor, the recommended type is selected under conditions as the following. That is, when an area of clear vision of a spectacle lens type currently in use is a "wide" type, the "wide" type is selected as the recommended type. When an area of clear vision of a spectacle lens type currently in use is the "middle" type, the "wide" type is selected as the recommended type and when an area of clear vision of a spectacle lens type currently in use is the "narrow" type, the "middle" type is selected as the recommended type.

### (When Fixation Disparity Amount of Spectacle Wearer Is Moderate)

When a fixation disparity amount of the spectacle wearer is moderate, the recommended type is selected under conditions as the following. That is, when a spectacle lens type currently in use is a type of "wide" area of clear vision, the "wide" type is selected as the recommended type. When the spectacle lens type currently in use is the type of "middle" area of clear vision, the "middle" type is selected as the recommended type and when the spectacle lens type currently in use is the type of "narrow" area of clear vision, the "narrow" type is selected as the recommended type.

### (When Fixation Disparity Amount of Spectacle Wearer Is Severe)

When a fixation disparity amount of the spectacle wearer is severe, the recommended type is selected under conditions as the following. That is, when an area of clear vision of a spectacle lens type currently in use is the "wide" type, the "middle" type is selected as the recommended type. When an area of clear vision of a spectacle lens type currently in use is the "middle" type, the "narrow" type is selected as the recommended type and when an area of clear vision of a spectacle lens type currently in use is the "narrow" type, the "narrow" type is selected as the recommended type.

Furthermore, the selector 11 confirms the information related to the "size of clear sight" included in the request information D5 and, as a result of this, when the spectacle wearer prefers a spectacle lens having a clear sight equivalent to that of the spectacle lens currently in use, the selector 11 refers to the data table illustrated in Fig. 6 and thereby selects the size type of area of clear vision (recommended type) of a progressive power lens recommended to the spectacle wearer. Hereinafter, specific descriptions are given.

### (When Fixation Disparity Amount of Spectacle Wearer Is Minor)

When a fixation disparity amount of the spectacle wearer is minor, the recommended type is selected under conditions as the following. That is, when a spectacle lens type currently in use is the type of "wide" area of clear vision, the "wide" type is selected as the recommended type. When the spectacle lens type currently in use is the type of "middle" area of clear vision, the "middle" type is selected as the recommended type and when the spectacle lens type currently in use is the type of "narrow" area of clear vision, the "narrow" type is selected as the recommended type.

### (When Fixation Disparity Amount of Spectacle Wearer Is Intermediate)

When a fixation disparity amount of the spectacle wearer is intermediate, the recommended type is selected under conditions as the following. That is, when a spectacle lens type currently in use is a type of "wide" area of clear vision, the "middle" type is selected as the recommended type. When the spectacle lens type currently in use is the type of "middle" area of clear vision, the "narrow" type is selected as the recommended type and when the spectacle lens type currently in use is the type of "narrow" area of clear vision, the "narrow" type is selected as the recommended type.

### (When Fixation Disparity Amount of Spectacle Wearer Is Severe)

When a fixation disparity amount of the spectacle wearer is severe, the recommended type is selected under conditions as the following. That is, when a spectacle lens type currently in use is the type of "wide" area of clear vision, the "middle" type is selected as the recommended type. When the spectacle lens type currently in use is the type of "middle" area of clear vision, the "narrow" type is selected as the recommended type and when the spectacle lens type currently in use is the type of "narrow" area of clear vision, the "narrow" type is selected as the recommended type.

Incidentally, when the spectacle wearer orders a spectacle lens capable of eliminating fixation disparity for the second time, how much the fixation disparity amount of the spectacle wearer has increased from the fixation disparity amount previously measured is important. For example, when the spectacle wearer ordering for the second time prefers a spectacle lens having a wider clear sight than before, rewriting the item of "fixation disparity amount of spectacle wearer" in Fig. 5 to "change amount of fixation disparity" allows for the data table in Fig. 5 to be used also in the case where the spectacle wearer orders the spectacle lens capable of eliminating fixation disparity for the second time. Incidentally, the "reference fixation disparity amount" in the present embodiment includes a change amount of fixation disparity, which is a difference between a fixation disparity amount at the time of producing the previous spectacle lens and a fixation disparity amount at the time of producing the current spectacle lens.

Similarly, when the spectacle wearer ordering for the second time prefers a spectacle lens having a clear sight equivalent to that of the spectacle lens currently in use, rewriting the item of "fixation disparity amount of spectacle wearer" in Fig. 6 to "change amount of fixation disparity" allows for the data table in Fig. 6 to be used also in the case where the spectacle wearer orders the spectacle lens capable of eliminating fixation disparity for the second time.

Incidentally, as for a method of determining the "change amount of fixation disparity", a reference change amount may be empirically determined similarly to the aforementioned estimation criteria.

### (Output of Recommended Type)

Next, the outputter 12 outputs, to the display 7, the recommended type selected by the selector 11 in the above manner in order to present to the spectacle wearer (S5). This allows for the recommended type selected by the selector 11 to be displayed on a screen of the display 7. This screen display presents the recommended type to the spectacle wearer.

### (Order Placing Processing)

Next, the order placing processor 13 confirms whether operation to change selection conditions of the recommended type has been performed in the inputter 5 (S6). When this operation has been performed, the recommended type is selected and output for the second time according to the changed selection conditions. Specifically, when the information related to the "size of clear sight" included in the request information D5 is changed from "when spectacle wearer prefers spectacle lens having clear sight equivalent to that of spectacle lens currently in use" to the "when spectacle wearer prefers spectacle lens having wide clear sight" as selection conditions of the recommended type, the data table to be referred to is changed from that in Fig. 6 to that in Fig. 5 accordingly.

Next, the order placing processor 13 confirms whether operation to confirm the progressive power lens to order for has been performed in the inputter 5 (S7). When this operation has been performed, order data of the progressive power lens is transmitted to the order receiving device 3 via the communication network 4 (S8). Here, if the spectacle wearer has fixation disparity, a prism amount required for correcting the fixation disparity is transmitted from the order placing device 2 to the order receiving device 3 as a prism prescription value. Therefore, the progressive power lens supplied from the order receiving device 3 to the order placing device 2 results as a spectacle lens with prism prescription based on the prism amount of the spectacle wearer.

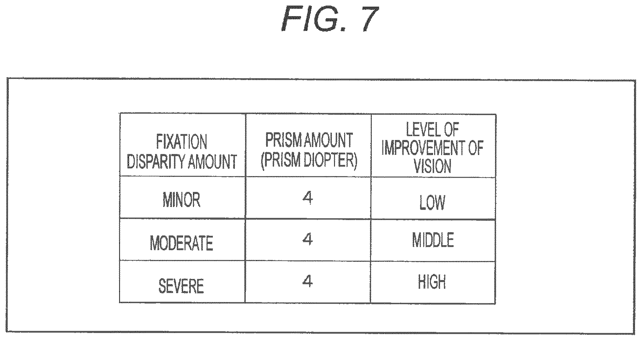

Fig. 7 is a diagram illustrating correlation among a fixation disparity amount, a prism amount, and a level of improvement of vision.

Looking at relation between the fixation disparity amount and the prism amount, even when the prism amount required for correcting fixation disparity is the same at 4Δ (prism diopter) as in Fig. 7, the fixation disparity amount corrected by the spectacle lens prescribed according to this prism amount varies from individual to individual. This means that, when a binocular vision is deteriorated by fixation disparity, how much deterioration actually is there depends on a level of the fixation disparity amount but on a level of the prism amount.

Furthermore, the level of improvement of vision due to the prism prescription based on the prism amount is substantially proportional to a value of fixation disparity amount before prism prescription. Therefore, when the fixation disparity amount before prism prescription is classified into three groups of "minor (small)", "moderate", and "severe (large)", the level of improvement of vision with the spectacle lens with the prism prescription is as follows. That is, the level of improvement of vision when the fixation disparity amount before prism prescription is "minor" is "low" while the level of improvement of vision when the fixation disparity amount before prism prescription is "moderate" is "middle". The level of improvement of vision when the fixation disparity amount before prism prescription is "severe" is "high". Moreover, when a person with fixation disparity wears a spectacle lens with prism prescription, binocular vision is enhanced. Therefore, a vision of blurred images due to fixation disparity before prism prescription becomes clear overall with the blur of images eliminated after prism prescription, thereby resulting in a feeling that the clear sight has enlarged. Especially in near vision, such impression is stronger.

Therefore, for example when the spectacle wearer with fixation disparity prefers to purchase a progressive power lens having a clear sight wider than that of the spectacle lens currently in use, the level of improvement of vision due to prism prescription is estimated from a value of the fixation disparity amount. Selecting the recommended type (size type) of area of clear vision of the progressive power lens based on this estimation result allows for presenting a progressive power lens more suitable for the spectacle wearer than before. Hereinafter, representative examples will be described.

### (Example 1)

When a fixation disparity amount of the spectacle wearer is "moderate" and a size type of area of clear vision of a progressive power lens currently in use is "middle" in the data table illustrated in Fig. 5, "middle" is selected and output as the recommended type. In this case, the spectacle wearer prefers a spectacle lens with a wide clear sight while the size type of area of clear vision selected by the selector 11 as the recommended type is the same as the spectacle lens type currently in use. Therefore, aggravation of distortion or a blur of images due to enlargement of the area of clear vision can be avoided. Moreover, the fixation disparity amount of the spectacle wearer is corrected by the prism prescription based on the prism amount having been measured in advance. Thus, the spectacle wearer wearing the progressive power lens with the prism prescription can enjoy the effect of wider clear sight due to correction of the fixation disparity amount. Therefore, the progressive power lens presented as the recommended type results as a spectacle lens that ensures the clear sight of a size conforming to the spectacle wearer's preference without increasing distortion or a blur of images.

### (Example 2)

When a fixation disparity amount of the spectacle wearer is "severe" and a size type of area of clear vision of a progressive power lens currently in use is "wide" in the data table illustrated in Fig. 5, "middle" is selected and output as the recommended type. In this case, the spectacle wearer prefers a spectacle lens with a wide clear sight while a size type of area of clear vision selected by the selector 11 as the recommended type is "middle" that is narrower than the spectacle lens type currently in use. Therefore, there is a concern about a narrower clear sight as compared to the spectacle lens currently in use although distortion or a blur of images is improved. In this case, however, the fixation disparity amount of the spectacle wearer is "severe" and thus a level of improvement in a vision improved by the prism prescription is quite large. Thus, the spectacle wearer wearing a progressive power lens with the prism prescription has an impression that the clear sight is enlarged with correction of the fixation disparity amount. Therefore, the progressive power lens presented as the recommended type results as a spectacle lens that ensures the clear sight of a size conforming to the spectacle wearer's preference and further mitigates distortion or a blur of images.

### (Example 3)

When a fixation disparity amount of the spectacle wearer is "moderate" and a size type of area of clear vision of a progressive power lens currently in use is "wide" in the data table illustrated in Fig. 6, "middle" is selected and output as the recommended type. In this case, the spectacle wearer prefers a spectacle lens having a clear sight equivalent to that of the spectacle lens currently in use while the size type of area of clear vision selected by the selector 11 as the recommended type is a narrower type than the spectacle lens type currently in use. Therefore, there is a concern about a narrower clear sight as compared to the spectacle lens currently in use although distortion or a blur of images is improved. In this case, however, the fixation disparity amount of the spectacle wearer is "moderate" and thus enlarged sight after improvement by the prism prescription can compensate the narrower clear sight. Therefore, the progressive power lens presented as the recommended type results as a spectacle lens that ensures the clear sight of a size conforming to the spectacle wearer's preference and further mitigates distortion or a blur of images.

### (Example 4)

When a fixation disparity amount of the spectacle wearer is "severe" and a size type of area of clear vision of a progressive power lens currently in use is "wide" in the data table illustrated in Fig. 6, "narrow" is selected and output as a recommended type. In this case, the spectacle wearer prefers a spectacle lens having a clear sight equivalent to that of the spectacle lens currently in use while the size type of area of clear vision selected by the selector 11 as the recommended type is a narrower type than the spectacle lens type currently in use. Therefore, there is a concern about a narrower clear sight as compared to the spectacle lens currently in use although distortion or a blur of images is improved. In this case, however, the fixation disparity amount of the spectacle wearer is "severe" and thus enlarged sight after improvement by the prism prescription can compensate the narrower clear sight. Therefore, the progressive power lens presented as the recommended type results as a spectacle lens that ensures the clear sight of a size conforming to the spectacle wearer's preference and further mitigates distortion or a blur of images.

### (Example 5)

When the spectacle wearer with fixation disparity wears a progressive power lens without prism prescription, the spectacle wearer feels that an area of clear vision from the intermediate portion to the near portion is especially narrow due to influence of fixation disparity. Such a spectacle wearer therefore often prefers a progressive power lens with the wider intermediate portion or near portion without recognizing that the spectacle wearer has fixation disparity. Also when the spectacle wearer of a progressive power lens with fixation disparity wears a progressive power lens with the prism prescription for the first time, the spectacle wearer feels that an area of clear vision from the intermediate portion to the near portion is especially enlarged due to elimination of fixation disparity. Therefore, of the areas of clear vision of the respective portions of a progressive power lens, selecting the size type of area of clear vision of at least the near portion by the selector 11 allows for presenting, as the recommended type to the spectacle wearer of the progressive power lens with fixation disparity, a progressive power lens where distortion or a blur is suppressed as much as possible in the side portion of the spectacle lens

In this manner, the present embodiment allows for estimating the level of improvement of vision due to the prism prescription from a value of the fixation disparity amount and ultimately presenting a progressive power lens more suitable for the spectacle wearer than before.

Meanwhile, the present inventor has obtained a finding about new issues related to estimation of the level of improvement of vision due to the prism prescription from the value of fixation disparity amount.

As described in Non Patent Literature 1, a person may need a large prism amount to eliminate a small fixation disparity amount while another person may need only a small prism amount to eliminate a large fixation disparity amount. For example, let us assume that the spectacle wearer has minor fixation disparity and tries to eliminate this fixation disparity while this spectacle wearer is the "person who needs a large prism amount to eliminate a small fixation disparity amount". In this case, a prism amount of a lens ultimately produced is significantly large. When this is the case, even if fixation disparity can be eliminated, the spectacle wearer needs to wear a lens having a large prism amount and to endure discomfort of vision caused by a large prism amount until the spectacle wearer becomes accustomed to the lens. What is obtained as a result of enduring the discomfort of vision is, however, elimination of minor fixation disparity with a slightly enlarged area of clear vision. Also from a perspective of appearance, providing a large prism amount to the lens may deteriorate appearance thereof.

In this manner, even when the prism is provided to the lens for eliminating fixation disparity, disadvantage is significantly larger than advantage.

Therefore, it is preferable to estimate the level of improvement of vision due to the prism prescription from the value of fixation disparity amount and to determine whether to provide a prism considering advantage and disadvantage. Therefore, the following configurations may be added to the configuration of the present embodiment. * A decision section to decide whether to prescribe a prism corresponding to a level of fixation disparity of the spectacle wearer according to a fixation disparity amount of the spectacle wearer and a prism amount required for correction of fixation disparity of the spectacle wearer by a progressive power lens.

Adding the above configuration to the present embodiment allows for providing, in addition to the effects of the present embodiment, a spectacle lens with good balance of advantage and disadvantage of the prism prescription to a person planning to wear the spectacle lens. Employing the above configuration instead of the selector of the present embodiment can of course solve the issues related the aforementioned advantage and disadvantage of the prism prescription.

### <4. Effects of Embodiment>

According to the embodiment of the present invention, a level of improvement of vision, when fixation disparity is corrected by the prism prescription based on the prism amount, is estimated from the value of the fixation disparity amount and the recommended type (size type) of area of clear vision of a progressive power lens is selected and output based on the estimation result. This allows for presenting a progressive power lens more suitable for the spectacle wearer than before as the recommended type. Specifically, when the spectacle wearer of a progressive power lens prefers to purchase a spectacle lens having a clear sight wider than that of the spectacle lens currently in use for example and the fixation disparity amount of the spectacle wearer is relatively large, a type having a relatively narrow area of clear vision is selected as the recommended type of progressive power lens. This allows for supplying, to a future spectacle wearer, a progressive power lens with less distortion or a blur while securing a clear sight of a size conforming to the preference of the spectacle wearer according to the level of improvement of vision due to the prism prescription.

As a result, the issues of the present invention can be solved. That is, when a prism is provided to a spectacle lens in order to eliminate fixation disparity, applying the present embodiment allows for appropriately enjoying advantage while mitigating disadvantage as much as possible. Furthermore in an optician's store, customer satisfaction can be improved.

In this manner, the present embodiment allows for supplying a type of progressive power lens more suitable for the spectacle wearer than before from among various progressive power lenses having different size types of area of clear vision according to spectacle lens design.

### <5. Variations>

A technical scope of the present invention is not limited to the aforementioned embodiments but may include various modifications or improvements as long as the specific effects obtained by the elements of the present invention or a combination thereof can be derived.

In the above embodiment, the fixation disparity amount is classified into three groups of minor, moderate, and severe for example. However, without limited thereto, the fixation disparity amount may be classified into two groups of minor and severe or into four or more groups. Similarly, the recommended types (size types) of area of clear vision of a progressive power lens can be classified into two or four or more groups.

Alternatively, the size type of area of clear vision of a progressive power lens may be selected, by using the value of measured fixation disparity amount of the spectacle wearer as a coefficient, under conditions that as the coefficient is larger, a progressive power lens with a smaller area of clear vision is selected.

The outputter 12 also outputs, to the display 7, the recommended type of progressive power lens selected by the selector 11 in order to present the recommended type of progressive power lens to the spectacle wearer in the above embodiment the, thereby displaying (presenting) the recommended type on a screen of the display 7; however, the present invention is not limited thereto. For example, the outputter 12 may output the recommended type of progressive power lens selected by the selector 11 to a printing device such as a printer, thereby printing the recommended type on a paper or the like. Other than the above, the outputter 12 may transmit the recommended type of progressive power lens selected by the selector 11 to a portable information terminal other than the order placing device 2 by wireless communication or the like, thereby displaying the recommended type on a display screen of the portable information terminal.

From the first place, the outputter 12 to display a result as an image in the above manner may not be included in the spectacle lens supply system. Ultimately, as long as an order-receiving side can grasp the size type of area of clear vision and the prism amount of the selected spectacle lens, a spectacle lens having effects of the present invention can be supplied to the spectacle wearer.

Like the outputter 12, the inputter 5 may be also omitted. Let us assume that, upon selecting the size type of area of clear vision of spectacle lens, a spectacle wearer, who has measured fixation disparity before and has been provided a spectacle lens capable of eliminating fixation disparity, requests an optician's store to produce a new spectacle lens. Here, if there is no change in the fixation disparity amount of the spectacle wearer, information of the spectacle wearer is read and the fixation disparity amount included in the information may be employed upon production of the spectacle lens as it is.

Furthermore in the above embodiment, the data table, which is referred to by the selector 11 when the selector 11 selects the recommended type of progressive power lens, is stored in the storage 14 of the computer section 6; however, the present invention is not limited thereto. For example, the data table may be stored in a storage device included in the order receiving device 3 or a server (e.g. data server) (not illustrated) connected to the communication network 4, thereby referring to the data table. Other than the above, for example, the selector 11 may inquire for the recommended type of progressive power lens at the order receiving device 3 via the communication network 4 and select the recommended type based on contents of a reply (response) from the order receiving device 3 in response to this inquiry. When employing this configuration, information such as the fixation disparity amount D2, the prism amount D3, the in-use spectacle lens information D4, and the request information D5 of the spectacle wearer may be transmitted from the order placing device 2 to the order receiving device 3 upon inquiry for the recommended type of progressive power lens.

Furthermore in the above embodiment, the request information D5 is input together with the information such as the fixation disparity amount D2 and the prism amount D3; however, the present invention is not limited thereto and may employ the following configuration for example. That is, request items such as "when thin spectacle lens is preferred", "when light spectacle lens is preferred" or "when wide vision is preferred" may be displayed on a screen of the display 7. When one or a plurality of request items is selected by the spectacle wearer (or a store clerk at an optician's store) by operation of a touch panel or the like, the recommended type of progressive power lens is displayed on the screen of the display 7 according to the selected request items.

Furthermore in the above embodiment, the prism amount of the spectacle wearer is measured after the fixation disparity amount of the spectacle wearer is measured as one of preferable embodiments; however, these measurements may be performed in an inverse order.

Furthermore in the above embodiment, the selector to select a size of an area of clear vision from among existing design types (wide, middle, and narrow) is described as the example of a determination section to determine the size of an area of clear vision in a progressive power lens; however, the present invention is not limited thereto. For example, using the fixation disparity amount obtained by input operation or the like, a progressive power lens may be optically designed to have a wide or narrow area of clear vision according to a level of the fixation disparity amount. A result of this may be presented by an astigmatism distribution for example.

Furthermore in the above embodiment, a case where the size of the area of clear vision is determined by the order placing device 2 has been described; however not limited thereto, the order receiving device 3 may determine the size of the area of clear vision (the order receiving device may include the determination section). Specifically, for example, the order information D1 and the fixation disparity amount D2, or the order information D1 and the prism amount D3, and as required, the in-use spectacle lens information D4 and the request information D5 may be transmitted from the order placing device 2 to the order receiving device 3 via the communication network 4. Thereafter, in a computer of a lens manufacturer receiving the order of the spectacle lens, a design with a wide or narrow area of clear vision is selected from among designs prepared in advance according to the level of fixation disparity amount, or design to allow the area of clear vision to be wide or narrow in each case is performed according to the level of fixation disparity amount like in the above embodiment, thereby reflecting the fixation disparity amount in actual lens design.

Furthermore as an act of the lens manufacturer, for example, the lens manufacturer itself may provide software for use at an optician's store or an ophthalmologist that can place an order. In this case, software provided to the optician's store or the like by the lens manufacturer may include a function of the determination section. The software may be used while installed in the computer of the optician's store or the like, thereby allowing for selecting a design with a wide or narrow area of clear vision from among designs prepared in advance according to the level of fixation disparity amount, or performing design to allow the area of clear vision to be wide or narrow in each case according to the level of fixation disparity amount. Thereafter, a result of selecting the design or a result of the design may be transmitted to the computer of the lens manufacturer, thereby reflecting the fixation disparity amount in actual lens design.

Furthermore, the above embodiment has described the example of using the order information D1, the fixation disparity amount D2, the prism amount D3, the in-use spectacle lens information D4, and the request information D5; however, the in-use spectacle lens information D4 and/or the request information D5 may be omitted for implementing an embodiment of the present invention as long as the order information D1 and the fixation disparity amount D2 or the order information D1 and the prism amount D3 are included.

Moreover, the present invention may be implemented as a spectacle lens supply method including a determination step of determining a size of an area of clear vision in a progressive power lens according to a level of a prescribed fixation disparity amount or as a spectacle lens production method including the determination step. In the spectacle lens production method, the size of an area of clear vision determined in the determination step is reflected to a lens design of a progressive power lens and a lens manufacturer performs spectacle lens processing or the like based on a result of the design and thereby produces the spectacle lens.

### Reference Signs List

- 1: spectacle lens supply system
- 2: order placing device
- 3: order receiving device
- 4: communication network
- 5: inputter
- 6: computer section
- 7: display
- 11: selector
- 12: outputter
- 13: order placing processor
- 14: storage

## Claims

1. A spectacle lens supply system (1) to supply a progressive power lens, the system **characterized by** comprising:
a determination section to determine a size of an area of clear vision in a progressive power lens according to a level of a prescribed fixation disparity amount.

2. The spectacle lens supply system (1) according to claim 1,
**characterized in that** the determination section selects a type having an area of clear vision same as or narrower than that of a reference progressive power lens when the prescribed fixation disparity amount is larger than or equal to a reference fixation disparity amount and selects a type having an area of clear vision same as or wider than that of the reference progressive power lens when the prescribed fixation disparity amount is smaller than the reference fixation disparity amount.

3. The spectacle lens supply system (1) according to claim 1, **characterized by** comprising:
an input section to input, to the determination section, the prescribed fixation disparity amount or a prescribed prism amount; and
an output section to output the size of the area of clear vision of the progressive power lens determined by the determination section and the prescribed prism amount.

4. The spectacle lens supply system (1) according to claim 3,
**characterized in that** the determination section calculates a fixation disparity amount according to the prescribed prism amount input by the input section, estimates, from a value of the calculated fixation disparity amount, a level of improvement of vision when the fixation disparity is corrected, and determines the size of the area of clear vision of the progressive power lens based on an estimation result thereof.

5. The spectacle lens supply system (1) according to any one of claims 1 to 4,
**characterized in that** the determination section determines at least a size of an area of clear vision of a near portion as the size of the area of clear vision of the progressive power lens.

6. A spectacle lens supply method to supply a progressive power lens, **characterized by** comprising:
a determination step of determining a size of an area of clear vision in a progressive power lens according to a level of a prescribed fixation disparity amount.

7. A spectacle lens supply program to cause a computer, in a spectacle lens supply system (1) to supply a progressive power lens, to function as a determination section to determine a size of an area of clear vision in the progressive power lens according to a level of a prescribed fixation disparity amount.

8. A spectacle lens recommended type presentation device to present a recommended type recommended with respect to a size of an area of clear vision of a progressive power lens, the device **characterized by** comprising:
a determination section to determine a size of an area of clear vision in the progressive power lens according to a level of a prescribed fixation disparity amount.

9. A spectacle lens production method, **characterized by** comprising:
a determination step of determining a size of an area of clear vision in a progressive power lens according to a level of a prescribed fixation disparity amount.
